# EUROPÄISCHE PATENTSCHRIFT

(11) **EP 0 538 198 B1**
(45) Veröffentlichungstag und Bekanntmachung des Hinweises auf die Patenterteilung: **27.12.1996**
(21) Anmeldenummer: 92810779.6
(22) Anmeldetag: 13.10.1992
(51) Int. Cl.: B23C 3/00, B23C 5/08, B42C 5/04

(54) **Rotierend angetriebener Fräskopf**
Rotatively driven cutter head
Tête porte lame entraînée en rotation

(30) Priorität: 18.10.1991 CH 3058/91
(43) Veröffentlichungstag der Anmeldung: 21.04.1993
(73) Patentinhaber: GRAPHA-HOLDING AG, CH-6052 Hergiswil (CH)
(72) Erfinder: Geiser, Peter, CH-9548 Matzingen (CH); Zängerle, Rolf, CH-8502 Herdern (CH)

(56) Entgegenhaltungen:
- WO-A-91/06435
- US-A- 3 822 626
- PATENT ABSTRACTS OF JAPAN vol. 1, no. 130 (M-4385)(1977) & JP-A-52 69 087 (MITSUBISHI KINZOKU K.K.)

## Beschreibung

Die Erfindung betrifft einen rotierend angetriebenen Fräskopf nach dem Oberbegriff des Patentanspruches 1, siehe WO-A-9106435.

Die Bearbeitung des Rückens eines Buchblockes ist für die Dauerhaftigkeit eines Buches oder einer Broschüre bedeutungsvoll. Neben einer Vergrösserung der Blattkantenfläche, bspw. durch das Herausholen von Papierfasern, werden an die Genauigkeit bei der Bearbeitung hohe Anforderungen gestellt.

Dabei wird ein an seinem Rücken bearbeiteter Buchblock zwischen Pressplatten oder Transportzangen eingespannt durch eine Bearbeitungsstation geführt.
Diesbezüglich ist es wichtig, dass einerseits der Buchblock unverschieblich in den Pressplatten gehalten ist und andererseits ein aufgrund einer zu grossen Presskraft entstehender pilzartiger Aushang nicht entstehen kann.

Diese bei der Bearbeitung zu Ungenauigkeiten an der Rückenoberfläche des Buchblockes führenden Tendenzen werden bei einem unsachgemässen Fräsvorgang am Aushang begünstigt, sodass eine völlig unausgerichtete und von den Sollmassen abweichende, zur Weiterverarbeitung unzureichende Oberfläche am Buchblockrücken bzw. Aushang entsteht.

Um diesem Umstand entgegentreten zu können, stellt sich die Aufgabe an die vorliegende Erfindung, ein Werkzeug für den Fräsvorgang am Aushang eines Buchblockes zu schaffen, das eine hohe Schnittleistung bei guter Qualität des Buchblockrückens erlaubt.

Erfindungsgemäss wird diese Aufgabe nach dem kennzeichnenden Teil des Patentanspruches 1 gelöst.

Dadurch wird es möglich sein, den Fräsvorgang, insbesondere bei dickeren Buchblöcken, mit geringerem spezifischem Kraftaufwand in zwei Stufen bei einem Arbeitsgang durchzuführen und die durch die Einwirkung des Fräskopfes entstehenden Deformationen am Aushang zu reduzieren.
Mit dieser Vorgehensweise kann alternativ der Fräsvorgang unter den Schneidstufen gleichsinnig oder gegensinnig drehend erfolgen, wodurch eine weitere Anspassung des Schneidwerkwerkzeuges an die Gegebenheiten des zu bearbeitenden Buchrückens möglich wird.
Insbesondere die am Aushang des noch unbearbeiteten Buchblockes bislang durch das Fräsen entstehenden Deformationen können auf diese Weise grösstenteils ausgeglichen bzw. weitestgehend vermieden werden.
Selbstverständlich ist mit der erfindungsgemässen Arbeitsweise auch die Absicht einer rationellen Bearbeitung verbunden.

Zur Durchführung dieses Vorgehens eignet sich ein Schneidwerkzeug, das einen Fräskopf mit mehreren Schneidkanten besitzt und aus wenigstens einem Plattenträger, der am Umfang verteilt mehrere dem zu bearbeitenden Rücken zugewendete, an Schneidplatten befestigte erste Reihe Schneidkanten aufweist, besteht, wobei sich der Fräskopf durch jeweils eine den Schneidkanten der ersten Reihe zugeordnete, etwa radial zur Drehachse hin versetzte, überhöhte Schneidkante einer zweiten Reihe auszeichnet.

Durch das erfindungsgemässe Vorgehen lässt sich eine Verschleissminderung an Fräskopf oder Schneidwerkzeug erzielen, sodass höhere Standzeiten entstehen.

Als Reihe werden jeweils wenigstens zwei Schneidkanten in einer Reihe am Umfang verstanden.

Dadurch wird es auch möglich sein, die zweite Frässtufe als Egalisierschnitt in einem Arbeitsdurchgang einzusetzen.

Zur wahlweisen Bestimmung der Ausmasse eines Fräskopfes sind vorteilhaft wenigstens die an Schneidplatten befestigten Schneidkanten der zweiten Reihe lösbar an dem Plattenträger angeordnet.

Vorzugsweise sind sowohl die Schneidkanten der ersten wie der zweiten Reihe an der Trägerplatte verstellbar ausgebildet, sodass hinsichtlich Schnittkreisdurchmesser und Schnittstufe eine universelle Anpassung an die zu verarbeitende Produktequalität vorgenommen werden kann.

Diese Möglichkeit kann durch von Schrauben durchsetzbaren schlitzartigen Durchtrittsöffnungen an den Werkzeugschäften der Schneidplatten erzielt werden.

Zur Erzielung einer wirtschaftlichen Schnittleistung sind die Schneidkanten an dem/den Plattenträger/n von einer durch die Drehachse des Fräskopfes verlaufenden Radialen in Drehrichtung betrachtet verschwenkt angeordnet, d.h. die Schneidkanten weisen gegenüber einer parallelen, durch die Drehachse des Fräskopfes verlaufenden Geraden, einen in Drehrichtung betrachtet zurückversetzten Abstand auf.

Im Sinne einer optimalen Anpassung an die unterschiedlichen Papierqualitäten kann der Plattenträger durch einen innenliegenden Teil und einen diesen koaxial umgebenden, gleich- oder gegensinnig antreibbaren, ringförmigen Teil mehrteilig ausgebildet sein.

Bei einer anderen Methode zur Bearbeitung der Buchrücken mittels eines Schneidwerkzeuges werden wenigstens zwei Fräsköpfe eingesetzt, deren Schnittkreise sich in einer Ebene schneiden, um die Antriebsleistung auf eine grössere Schnittfläche verteilen zu können.
Zusätzlich kann durch diese Ausgestaltung des Schneidwerkzeuges ein Egalisierungseffekt erzielt werden.

Durch die beidseits des Buchblockes nach innen gerichtete Schneidwirkung, können Deformationen an den Buchkanten weitgehend vermieden bzw. kompensiert werden.

Dabei erweist es sich als vorteilhaft, wenn die Fräsköpfe auf der Bearbeitungsseite des Werkzeuges gegensinnig drehend angetrieben sind, sodass noch zusätzlich eine verbesserte Abfuhr der Späne erreicht werden kann.

Der Schneidvorgang mit diesem Werkzeug kann dadurch intensiviert werden, wenn die Schneidkanten eines Fräskopfes in die durch sie gebildeten Zwischenräume des benachbarten Fräskopfes auf der Länge der durch den vorderen und den hinteren Schnittpunkt verlaufenden Geraden gebildeten Strecke (a) eingreifen.

Um die Schnittleistung optimieren zu können, ist es vorteilhaft, wenn der Abstand zwischen den Zentren der Fräsköpfe verstellbar ausgebildet ist.

Vorteilhaft ist das Schneidwerkzeug zur Optimierung des Fräsvorgangs seitlich verstellbar ausgebildet, zumal die Transportzangen üblicherweise eine feste Seitenplatte besitzen, sodass die Längsmittelachse der Buchblöcke unterschiedlicher Dicken jeweils verschiedene seitliche Abstände von der Festplatte aufweisen.

Eine schonende Bearbeitung kommt insbesondere dann zur Anwendung, wenn die an der Strecke (a) von den Schnittkreisen der Fräsköpfe eingeschlossene Ueberdeckungsfläche wenigstens annähernd die Dicke eines zu bearbeitenden Buchrückens aufweist.

Bei der Verwendung dieses Schneidwerkzeuges ist vorteilhaft darauf zu achten, dass bei der Bearbeitung von Buchrücken die Breite der Ueberdeckungsfläche wenigstens annähernd gleichmässig auf die Dicke eines Buchblockes verteilt wird.
Durch eine hinsichtlich der Bearbeitungsrichtung schräggestellte Anordnung der Fräsköpfe könnten die Späne seitlich über den Rückenrand hinaus abgeführt werden.

Damit durch die rückwärtige Seite der Schnittkreise keine Nachhschneideriefen entstehen können, ist das Schneidwerkzeug vorzugsweise gegen die Schnittkante hin leicht anzustellen.

Nachstehend werden anhand der Zeichnung Ausführungsbeispiele der Erfindung näher erläutert. Es zeigen:
- Fig. 1: eine Draufsicht auf einen Fräskopf eines Schneidwerkzeuges,
- Fig. 2: einen Querschnitt des Fräskopfes gemäss Fig. 1 nach den Schnitt II - II und
- Fig. 3: eine Ansicht eines Schneidwerkzeuges mit zwei Fräsköpfen von unten.

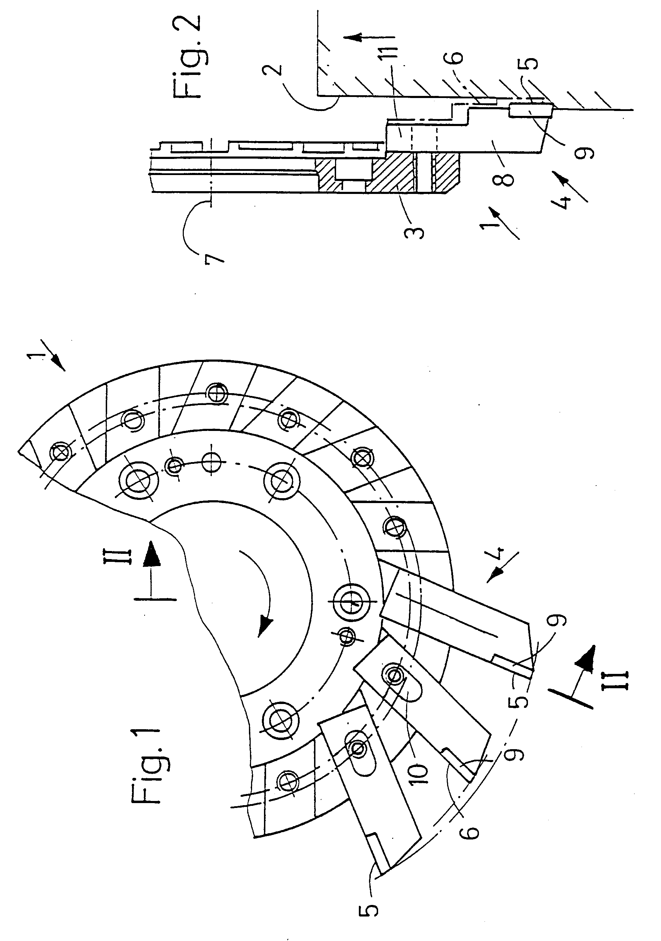

In den Fig. 1 und 2 ist ein Fräskopf 1 eines nicht vollständig dargestellten Schneidwerkzeuges resp. Fräswerkzeuges für die Bearbeitung von Buchrücken 2 gezeigt, wobei das Schneidwerkzeug an einer stationären Werkzeugaufnahme befestigt ist und der zu bearbeitende Buchblock in Transport- und Haltezangen vorbeigeführt wird. Der Fräskopf 1 besteht aus einem scheibenartigen Plattenträger 3, an dessen Stirnseite am Umfang verteilt mehrere an Schneidplatten 4 befestigte, dem zu bearbeitenden Buchblockrücken 2 zugewandte Schneidkanten 5 einer ersten Reihe angeordnet sind.
Dieser ersten Reihe Schneidkanten 5 ist eine zweite Reihe Schneidkanten 6 zugeordnet, die am Umfang gegenüber den Schneidkanten 5 der ersten Reihe zur Drehachse 7 des Schneidwerkzeuges hin zurückversetzt und stirnseitig die Schneidkanten 5 der ersten Reihe überragend angeordnet sind. Die Schneidkanten 5, 6 können aus den auch im Metallbau bekannten Materialien gebildet sein. Beispielsweise durch Löten oder Kleben an einem Werkzeugschaft 8 befestigte Wendeplatten 9. Der Verstellbarkeit wegen sind die Schneidplatten 4 mit schlitzartigen Durchtrittsöffnungen 10 in dem Befestigungsschaft 11 versehen.
Die Schneidkanten 5, 6 sind über die Werkzeugschäfte 8 derart angeordnet, dass sie am Umfang in Drehrichtung verdreht ausgerichtet sind bzw. dass sie zu einer durch die Drehachse verlaufenden Geraden parallel zurückversetzt an dem Plattenträger 3 befestigt sind.

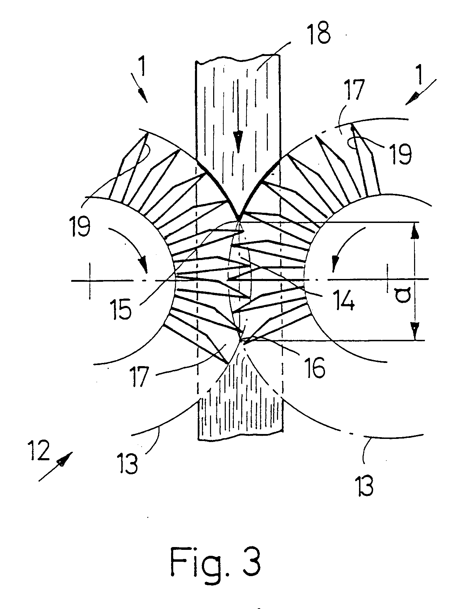

Bei dem in Fig. 3 veranschaulichten Schneidwerkzeug 12 sind zwei in Bearbeitungsrichtung betrachtet gegenläufig mit gleicher Umfangsgeschwindigkeit rotierend angetriebene Fräsköpfe 1 vorgesehen, die seitlich benachbart zueinander angeordnet sind. Die durch ihre Schnittkanten 19 gebildeten Schnittkreise 13 schneiden sich in einer gemeinsamen, durch die Schnittkanten 19 gebildeten Schnittebene.
Durch die sich schneidenden Schnittkreise 13 am Umfang des Fräskopfes 1 greifen die Schnittkanten 19 im gemeinsamen Ueberdeckungsbereich 14, an der durch einen vorderen Schnittpunkt 15 und einen hinteren Schnittpunkt 16 gebildeten Strecke (a) gegenseitig in die durch sie gebildeten Zwischenräume 17 ein. Diese Strecke (a) verläuft wenigstens annähernd senkrecht zu der durch die Drehachsen der Fräsköpfe gebildeten Ebene. Durch einen tieferen gegenseitigen Eingriff der Schnittkanten 19 und/oder durch die Verwendung entsprechender Schnittkreise könnte der gemeinsame Überdeckungsbereich 14 wenigstens annähernd so breit wie die Rückenbreite eines Buchblockes bestimmt werden.

## Patentansprüche

1. Rotierend angetriebener Fräskopf (1) eines mehrschneidigen Schneidwerkzeuges für die spanabhebende Bearbeitung von Buch- oder dgl. Rücken (2) zusammengepresster Druckbogen, die nach dem Klebebindeverfahren gebunden werden, wobei das Schneidwerkzeug stirnseitig verteilt, vorstehende Schneidkanten (5, 6) aufweist, dadurch gekennzeichnet, dass den an Schneidplatten (4) befestigten, am Umfang eines Plattenträgers (3) eine erste Reihe bildenden Schneidkanten (5) eine zur Bildung einer Schneidstufe etwa radial zur Drehachse (7) hin versetzte zweite Reihe mit bezüglich der ersten Reihe überhöhten Schneidkanten (6) zugeordnet ist.

2. Fräskopf nach Anspruch 1, dadurch gekennzeichnet, dass die Schneidkanten (6) vornehmlich der zweiten Reihe an lösbaren Schneidplatten (4) befestigt sind.

3. Fräskopf nach Anspruch 2, dadurch gekennzeichnet, dass die Schneidkanten (5, 6) der ersten und der zweiten Reihe mittels Schneidplatten (4) an dem Plattenträger (3) verstellbar ausgebildet sind.

4. Fräskopf nach Anspruch 3, dadurch gekennzeichnet, dass die Schneidplatten (4) einen Befestigungsschaft (11) aufweisen, in welchem eine schlitzartige Durchtrittsöffnung (10) vorgesehen ist.

5. Fräskopf nach einem der Ansprüche 1 bis 4, dadurch gekennzeichnet, dass die Schneidkanten (5, 6) jeweils im Endbereich einer Sehne des Schnittkreises angeordnet sind und eine im Drehrichtungssinn des Fräskopfes (1) nach vorne geneigte Lage aufweisen.

6. Fräskopf nach einem der Ansprüche 4 bis 5, dadurch gekennzeichnet, dass der Fräskopf (1) zweiteilig mit einem innenliegenden scheibenartigen Plattenträger und einem diesen koaxial umgebenden, gleich- oder gegensinnig antreibbaren, ringförmigen Plattenträger ausgebildet ist.

## Claims

1. Rotatively driven cutter head (1) of a multiple-edged cutting tool for machining the backs (2) of books or the like consisting of compressed printed sheets bound by adhesive binding, the cutting tool having projecting cutting edges (5, 6) distributed over its end face, characterised in that the cutting edges (5) secured to cutting tips (4) and forming a first row on the circumference of the tip carrier (3) are associated with a second row with higher cutting edges (6) than the first row offset substantially radially relative to the axis of rotation (7) in order to form one cutting stage.

2. Cutter head according to claim 1, characterised in that the cutting edges (6) mainly of the second row are secured to removable cutting tips (4).

3. Cutter head according to claim 2, characterised in that the cutting edges (5, 6) of the first and second rows are adjustable on the tip carrier (3) by means of cutting tips (4).

4. Cutter head according to claim 3, characterised in that the cutting tips (4) have a fixing shank (11) in which a slot-type through opening (10) is provided.

5. Cutter head according to one of claims 1 to 4, characterised in that the cutting edges (5, 6) are each arranged in the end region of a chord of the cutting circle and have a position inclined towards the front in the direction of rotation of the cutter head (1).

6. Cutter head according to one of claims 4 to 5, characterised in that the cutter head (1) is formed in two parts with an internal disc-type tip carrier and an annular tip carrier which surrounds the latter coaxially and can be driven in the same or in the opposite direction.

## Revendications

1. Tête de fraisage (1) entraînée en rotation d'un outil coupant à plusieurs tranchants pour l'usinage par enlèvement de matière de dos (2) de couverture ou analogues de feuilles imprimées pressées les unes contre les autres qui sont reliées par brochage sans couture, l'outil coupant présentant des tranchants en saillie (5, 6) répartis sur son côté frontal, **caractérisée** en ce qu'aux tranchants (5), fixés sur des plaquettes de coupe (4) et formant une première rangée sur la périphérie d'un porte-plaquettes (3), est associée une seconde rangée décalée environ radialement vers l'axe de rotation (7) afin de former un gradin de coupe, avec des tranchants (6) surélevés par rapport à la première rangée.

2. Tête de fraisage selon la revendication 1, **caractérisée** en ce que les tranchants (6), principalement de la seconde rangée, sont fixés sur des plaquettes de coupe amovibles (4).

3. Tête de fraisage selon la revendication 2, **caractérisée** en ce que les tranchants (5, 6) de la première et de la seconde rangée peuvent être réglés sur le porte-plaquettes (3) par l'intermédiaire des plaquettes de coupe (4).

4. Tête de fraisage selon la revendication 3, **caractérisée** en ce que les plaquettes de coupe (4) présentent une queue de fixation (11) dans laquelle est prévue une ouverture traversante (10) du genre fente.

5. Tête de fraisage selon une des revendications 1 à 4, **caractérisée** en ce que les tranchants (5, 6) sont respectivement disposés dans la région terminale d'une corde du cercle de coupe, et présentent une position inclinée vers l'avant dans le sens de rotation de la tête de fraisage (1).

6. Tête de fraisage selon la revendication 4 ou 5, **caractérisée** en ce que la tête de fraisage (1) est réalisée en deux parties, avec un porte-plaquettes intérieur du genre disque, et un porte-plaquettes annulaire entourant coaxialement le précèdent et pouvant être entraîné dans le même sens ou dans le sens contraire.
